# EUROPEAN PATENT APPLICATION

(11) **EP 4 834 753 A1**
(43) Date of publication of application: **04.11.2026**
(21) Application number: 23963124.5
(22) Date of filing: 27.12.2023
(51) Int. Cl.: B64C 13/20, B64D 1/00, B64U 10/13, B64U 20/87, G05D 1/222, B64U 101/40

(54) **OPERATION DEVICE AND WORK MACHINE**

(71) Applicant: Kubota Corporation, Osaka 556-8601 (JP)
(72) Inventor: SEINO Kohei, Sakai-shi, Osaka 590-0908 (JP)
(74) Representative: Cabinet Beau de Loménie
(86) International application number: PCT/JP2023/046962
(87) International publication number: WO 2025/141775

(57) **Abstract**

An operating device 5 capable of operating an aerial vehicle 2 that flies by generating thrust and a working device 4 coupled to the aerial vehicle 2 and capable of performing work on a ground surface, the operating device 5 including: a single device body 50; and operating tools (51, 52) included in the single device body 50 and configured to operate the aerial vehicle 2 and the working device 4.

## Description

### Technical Field

The present invention relates to a working machine including an aerial vehicle and a working device that are operable with the use of an operating device.

### Background Art

For example, as disclosed in Patent Document 1, some working machines include an aerial vehicle and a working device coupled to the aerial vehicle by wires.

### Prior Art Document

### Patent Document

Patent Document 1: WO 2023/203670

### Summary of the Invention

### Problem to be Solved by the Invention

An aerial vehicle provided in such a working machine is generally operated with the use of an operating device that communicates with the aerial vehicle wirelessly.

Furthermore, a working device that performs work at a location remote from an operator, such as that disclosed in Patent Document 1, is generally operated with the use of an operating device that wirelessly communicates with the working device.

That is, an operator is required to perform operation with the use of two operating devices in order to operate the aerial vehicle and the working device.

Accordingly, upon the utilization of a working machine, there is a demand for a working machine capable of improving operability in operating the aerial vehicle and the working device.

### Means for Solving Problem

An operating device according to the present invention is an operating device capable of operating an aerial vehicle that flies by generating thrust and a working device coupled to the aerial vehicle and capable of performing work on a ground surface, the operating device including: a single device body; and an operating tool included in the single device body and configured to operate the aerial vehicle and the working device.

According to the present invention, a configuration is achieved in which an operating tool included in a single operation body is used to operate the aerial vehicle and the working device. With this configuration, the operator can operate the aerial vehicle and the working device with the use of a single operating device. That is, when operating the aerial vehicle and the working device, the operator does not need to switch between two operating devices, namely an operating device for the aerial vehicle and an operating device for the working device. As a result, it is possible to improve operability in operating the aerial vehicle and the working device.

In the present invention, it is preferable that the operating device includes: a first mode switching tool configured to switch between a flight operation mode for operating the aerial vehicle and a work operation mode for operating the working device.

With this configuration, the operator need only switch, with the use of the first mode switching tool, to the flight operation mode when operating the aerial vehicle and to the work operation mode when operating the working device, and the operator can intuitively understand the method of switching between the mode for operating the aerial vehicle and the mode for operating the working device.

In the present invention, it is preferable that the operating device further includes: a communication device configured to output an operation signal to the aerial vehicle in response to operation of the operating tool in the flight operation mode, and to output an operation signal to the working device in response to operation of the operating tool in the work operation mode.

With this configuration, it is possible to realize mode switching with a simple configuration in which an operation signal is transmitted from the operating tool to the aerial vehicle in the flight operation mode, and an operation signal is transmitted from the operating tool to the working device in the work operation mode.

In the present invention, it is preferable that the operating tool includes an operating stick swingable in one direction and another direction intersecting the one direction, and in the flight operation mode, in response to operations of the operating stick in the one direction and the other direction, the communication device outputs operation signals corresponding to the operations in the one direction and the other direction to the aerial vehicle, respectively, and in the work operation mode, in response to the operations of the operating stick in the one direction and the other direction, the communication device outputs operation signals corresponding to the operations in the one direction and the other direction to the working device, respectively.

With this configuration, it is possible for the operating tool to have a configuration generally used for the operation of an aerial vehicle such as a so-called drone. Furthermore, it is possible to realize mode switching with a simple configuration in which an operation signal is transmitted from the operating tool to the aerial vehicle in the flight operation mode and an operation signal is transmitted from the operating tool to the working device in the work operation mode.

In the present invention, it is preferable that the operating tool includes a common operating tool configured to operate both the aerial vehicle and the working device simultaneously.

With this configuration, it is possible to easily operate both the aerial vehicle and the working device simultaneously with the use of the common operating tool. For example, this configuration is useful when it is desired to simultaneously perform a turning operation of the aerial vehicle in the left-right direction and a turning operation of the working device in the left-right direction.

In the present invention, it is preferable that the operating device further includes: a communication device configured to receive flight data transmitted from the aerial vehicle and work data transmitted from the working device.

With this configuration, for example, the working device can receive information such as a flight altitude transmitted from the aerial vehicle, and the operator can operate the aerial vehicle after checking the information. Similarly, for example, when the working device is a mower, the working device can receive information regarding the rotation speed of the cutting blade thereof, and the operator can operate the working device after checking the information.

In the present invention, it is preferable that the flight data includes image data captured by a flight imaging device included in the aerial vehicle, and the work data includes image data captured by a work imaging device included in the working device.

With this configuration, the operator can operate the aerial vehicle and the working device based on information captured by imaging devices included in the aerial vehicle and the working device, respectively.

In the present invention, it is preferable that the operating device further includes: a display device configured to display the image data included in the flight data and the image data included in the work data.

With this configuration, by viewing the display device, the operator can operate the aerial vehicle and the working device based on pieces of information captured by the imaging devices respectively included in the aerial vehicle and the working device.

In the present invention, it is preferable that the operating device further includes: a second mode switching tool configured to switch between a flight display mode for displaying an image captured by the flight imaging device on the display device and a work display mode for displaying an image captured by the work imaging device on the display device.

With this configuration, it is possible to switch between the flight display mode and the work display mode independent of the switching operation between the flight operation mode and the work operation mode. For example, the operator can view an image captured by the work imaging device while operating the aerial vehicle.

In the present invention, it is preferable that the operating device further includes: an aerial vehicle operating unit including the operating tool configured to operate the aerial vehicle; and a work operating unit including the operating tool configured to operate the working device.

With this configuration, it is possible to operate the aerial vehicle and the working device without performing an operation mode switching operation.

A working machine according to the present invention includes: an aerial vehicle configured to fly by generating thrust; a working device coupled to the aerial vehicle and configured to perform work on a ground surface; and the operating device described above.

According to the present invention, it is possible to form a working machine that includes the operating device achieving the above-described effects.

### Brief Description of the Drawings

FIG. 1 is a schematic side view of a working machine.
FIG. 2 is a block diagram showing a configuration relating to control of the working machine.
FIG. 3 is a diagram showing a configuration of an operating device.
FIG. 4 is a diagram showing a configuration of an operating device according to an alternative embodiment.

### Best Mode for Carrying out the Invention

Embodiments for carrying out the present invention will be described with reference to the drawings. In the following description, the direction indicated by an arrow U in the drawings is referred to as "up", and the direction indicated by an arrow D in the drawings is referred to as "down", unless otherwise specified.

### Overall Configuration of Working Machine

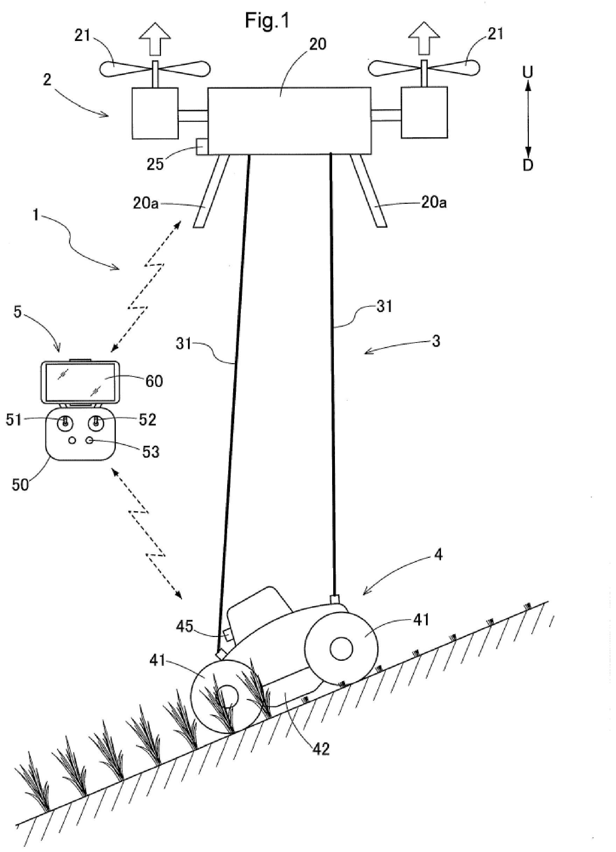

A working machine 1 according to the present embodiment will be described below. As shown in FIG. 1, the working machine 1 includes an aerial vehicle 2, a coupling mechanism 3, and a working device 4. The working machine 1 is configured to be capable of performing agricultural work with use of the working device 4 while the aerial vehicle 2 is flying.

### Configuration of Aerial Vehicle

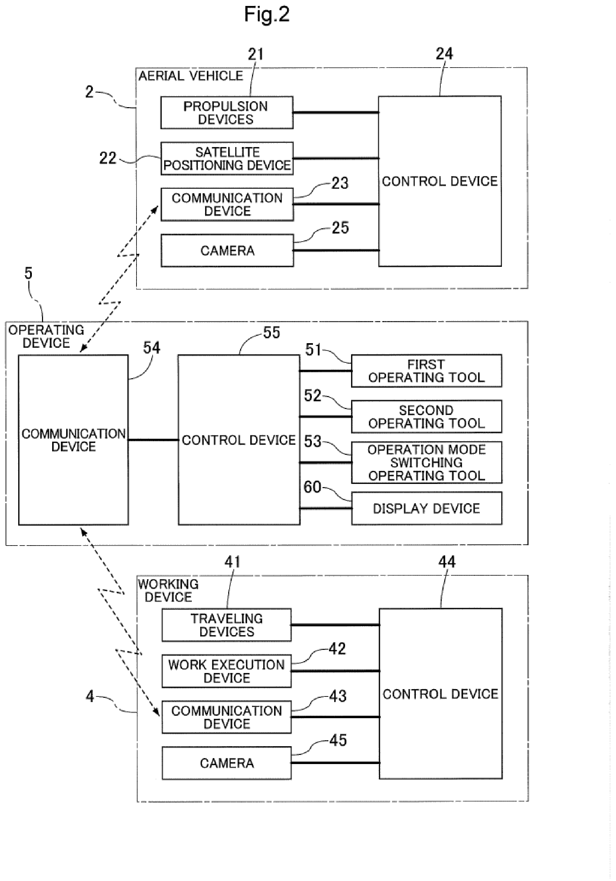

The aerial vehicle 2 generates thrust to fly. As shown in FIG. 2, an airframe 20 of the aerial vehicle 2 includes legs 20a for landing, propulsion devices 21, a satellite positioning device 22, a communication device 23, a control device 24, and a flight imaging device 25.

The propulsion devices 21 are propellers that are driven to rotate. A drive source of the propulsion devices 21 may be an engine or an electric motor. The number of propulsion devices 21 is preferably three or more, and may be four, five, six, seven, or more. The airframe 20 may include a plurality of types of propulsion devices 21 that differ in size or output.

The satellite positioning device 22 receives positioning signals from satellites used in a Global Navigation Satellite System (GNSS, such as GPS, QZSS, Galileo, GLONASS, or BeiDou). The satellite positioning device 22 generates positioning data indicating the current position of the aerial vehicle 2 based on the received positioning signals.

The communication device 23 communicates with an operating device 5, which will be described later.

The control device 24 controls the operation of the aerial vehicle 2 by controlling the propulsion devices 11. The control device 24 may include one or more ECUs mounted on the aerial vehicle 2.

The flight imaging device 25 is a camera that is included in the aerial vehicle 2 and is capable of imaging the surroundings of the aerial vehicle 2.

### Configuration of Coupling Mechanism

As shown in FIG. 1, the coupling mechanism 3 couples the aerial vehicle 2 and the working device 4. The coupling mechanism 3 includes four wires 31. Upper ends of the wires 31 are coupled to the aerial vehicle 2, and lower ends of the wires 31 are coupled to the working device 4.

Here, the aerial vehicle 2 or the working device 4 may include a winch, and the wires 31 may be wound and unwound by the winch.

### Configuration of Working Device

The working device 4 is a device capable of performing work on the ground surface. In the present embodiment, the working device 4 is a mower. The working device 4 may be a tiller, a seedling transplanter, a seeder, a chemical sprayer, a harvester, a granular chemical applicator, a fertilizer applicator, or the like.

As shown in FIG. 2, the working device 4 includes traveling devices 41, a work execution device 42, a communication device 43, a control device 44, and a work imaging device 45.

As shown in FIGS. 1 and 2, in the present embodiment, the traveling devices 41 are devices that contact the ground surface to cause the working device 4 to travel, and are wheels configured to be steerable. The traveling devices 41 may be crawler-type traveling devices or leg-type traveling devices. Note that in the present embodiment, the traveling devices 41 are not driven, and the working device 4 moves forward and rearward by being towed by the aerial vehicle 2 connected via the coupling mechanism 3.

The work execution device 42 is a device that actually performs work on the ground surface. In the present embodiment, the work execution device 42 is a cutting blade. The work execution device 42 may be a tilling device, a seedling transplanter device, a seeding device, a sprayer device (for chemicals, granular chemicals, or fertilizers), or a harvesting device.

As shown in FIG. 2, the communication device 43 communicates with the operating device 5, which will be described later.

The control device 44 controls the operation of the working device 4. The control device 44 may include one or more ECUs mounted on the working device 4.

The working device 4 may include an engine, a fuel tank, and a battery as a power source. The working device 4 may operate with the battery mounted on the working device 4, or may operate with electric power supplied from the aerial vehicle 2. In a case where electric power is supplied from the aerial vehicle 2 to the working device 4, examples of a power supply method include power supply via an electric wire provided along the coupling mechanism 3, wireless power supply, and the like.

The work imaging device 45 is a camera that is provided in the working device 4 and is capable of imaging the surroundings of the working device 4.

### Configuration of Operating Device

As shown in FIG. 1, the working machine 1 includes the operating device 5 operated by an operator. In the present embodiment, the operating device 5 is a device that an operator operates mainly with the use of two operating tools, and the two operating tools are operating sticks each having a stick shape and being operable with a finger by the operator.

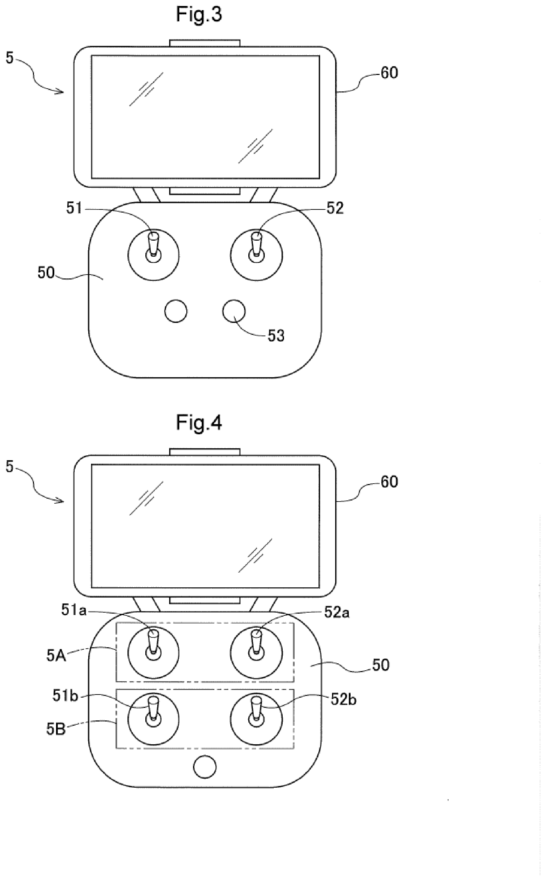

As shown in FIG. 3, the operating device 5 includes a single device body 50 and the two operating tools included in the device body 50 and operable by an operator, the two operating tools being a first operating tool 51 (corresponding to the "operating stick" according to the present invention) and a second operating tool 52 (corresponding to the "operating stick" according to the present invention).

The first operating tool 51 and the second operating tool 52 are each configured to be swingable in a left-right direction in FIG. 3 (corresponding to the "one direction" according to the present invention, and hereinafter referred to as the "left-right direction") and in an up-down direction in FIG. 3, which is a direction intersecting therewith (corresponding to the "other direction" according to the present invention, and hereinafter referred to as the "up-down direction").

Furthermore, the operating device 5 includes, as an operating tool, an operation mode switching operating tool 53 (corresponding to the "first mode switching tool" according to the present invention) capable of switching between a flight operation mode for operating the aerial vehicle 2 and a work operation mode for operating the working device 4. Note that, in order to notify the operator of the current operation mode, the current operation mode may be displayed on a display device 60, which will be described later, but there is no particular limitation to such a configuration.

As shown in FIG. 2, in the present embodiment, the operating device 5 includes a communication device 54 and a control device 55. When the operation mode is switched to the flight operation mode in response to the operation mode switching operating tool 53 being operated, the communication device 54 communicates with the communication device 23 of the aerial vehicle 2.

The control device 55 detects operations of the first operating tool 51, the second operating tool 52, and the operation mode switching operating tool 53, and controls the communication device 54 to output operation signals corresponding to the operations of the operating tools. The control device 55 may include one or more ECUs mounted on the operating device 5.

In the flight operation mode, when the first operating tool 51 and the second operating tool 52 of the operating device 5 are operated in the left-right direction and the up-down direction, operation signals corresponding to these operations are output to the aerial vehicle 2. Specifically, the output operation signals are transmitted from the communication device 54. The transmitted operation signals are received by the communication device 23 of the aerial vehicle 2 and are transmitted to the control device 24 of the aerial vehicle 2. The control device 24 controls operations of the propellers or the like, which are the propulsion devices 21, of the aerial vehicle 2 based on the transmitted operation signals.

For example, the operation of the first operating tool 51 may cause the aerial vehicle 2 to ascend or descend and turn left or right, and the operation of the second operating tool 52 may cause the aerial vehicle 2 to move forward or rearward and move left or right, but there is no particular limitation to such a configuration.

When the operation mode is switched to the work operation mode in response to the operation mode switching operating tool 53 being operated, the communication device 54 communicates with the communication device 43 of the working device 4.

In the work operation mode, when the first operating tool 51 and the second operating tool 52 of the operating device 5 are operated in the left-right direction and the up-down direction, operation signals corresponding to these operations are output to the working device 4. Specifically, the output operation signals are transmitted from the communication device 54. The transmitted operation signals are received by the communication device 43 of the working device 4 and are transmitted to the control device 44 of the working device 4. The control device 44 controls operations of the working device 4 based on the transmitted operation signals.

For example, the operation of the first operating tool 51 may cause a cutting blade, which is the work execution device 42 of the working device 4, to start or stop rotating and to increase or decrease the rotation speed thereof, and the operation of the second operating tool 52 may cause the traveling devices 41 of the working device 4 to turn left or right, but there is no particular limitation to such a configuration.

With the configuration described above, the first operating tool 51 and the second operating tool 52 of the operating device 5 are common operating tools configured to be capable of operating the aerial vehicle 2 in the flight operation mode and to be capable of operating the working device 4 in the work operation mode.

### Configuration of Display Device of Operating Device

The operating device 5 includes a display device 60 capable of displaying an image captured by the flight imaging device 25 and an image captured by the work imaging device 45.

In the flight operation mode, the communication device 54 of the operating device 5 receives data transmitted from the communication device 23 of the aerial vehicle 2. Here, the data transmitted from the communication device 23 of the aerial vehicle 2 is referred to as flight data. The flight data includes image data captured by the flight imaging device 25. The display device 60 displays an image captured by the flight imaging device 25 in real time based on the transmitted image data.

In the work operation mode, the communication device 54 of the operating device 5 receives data transmitted from the communication device 43 of the working device 4. Here, the data transmitted from the communication device 43 of the working device 4 is referred to as work data. The work data includes image data captured by the work imaging device 45. The display device 60 displays an image captured by the work imaging device 45 in real time based on the transmitted image data.

### Alternative Embodiments

Alternative embodiments in which modifications are made to the embodiment described above are illustrated below.
(1) Although the above embodiment describes, as an example, a configuration in which the display device 60 displays an image captured by the flight imaging device 25 in the flight operation mode and displays an image captured by the work imaging device 45 in the work operation mode, the present invention is not limited to the above embodiment. For example, it is possible to employ a configuration provided with a display mode switching operating tool capable of switching between a flight display mode, which is a mode for displaying an image captured by the flight imaging device 25 on the display device 60, and a work display mode, which is a mode for displaying an image captured by the work imaging device 45 on the display device 60. In this case, it is possible to employ a configuration in which the display mode is switchable by the display mode switching operating tool (corresponding to the "second mode switching tool" according to the present invention) independently of the switching of the operation mode by the operation mode switching operating tool 53.
(2) Although the above embodiment describes, as an example, a configuration in which the operating device 5 is provided with the use of two operating tools (the first operating tool 51 and the second operating tool 52), the present invention is not limited to the above embodiment. For example, as shown in FIG. 4, it is possible to employ a configuration including an aerial vehicle operating unit 5A and a work operating unit 5B, and in which the aerial vehicle operating unit 5A is provided with a first flight operating tool 51a and a second flight operating tool 52a for operating the aerial vehicle 2, and the work operating unit 5B is provided with a first work operating tool 51b and a second work operating tool 52b for operating the working device 4.
   Further, for example, it is possible to employ a configuration in which a common operating tool for operating both the aerial vehicle 2 and the working device 4 simultaneously is provided as an operating tool, in addition to or instead of the first operating tool 51 and the second operating tool 52.
(3) Although the above embodiment describes, as an example, a configuration in which the operating device 5 communicates with the aerial vehicle 2 in the flight operation mode and the communication device 54 communicates with the working device 4 in the work operation mode, the present invention is not limited to the above embodiment. For example, it is possible to employ a configuration in which the communication device 23 of the aerial vehicle 2 and the communication device 43 of the working device 4 communicate with each other, and in the flight operation mode, the operating device 5 communicates with the aerial vehicle 2 via the working device 4. Further, it is possible to employ a configuration in which the operating device 5 communicates with the working device 4 via the aerial vehicle 2 in the work operation mode.
(4) Although the above embodiment describes, as an example, a configuration in which the operating device 5 is a device operated by an operator mainly with the use of two operating tools, the present invention is not limited to the above embodiment. For example, it is possible to employ a configuration in which the operating device 5 is a smartphone or a tablet having an operating screen on which images for operation corresponding to the first operating tool 51 and the second operating tool 52 according to the present invention are displayed. That is, with this configuration, an operator is able to operate the aerial vehicle 2 and the working device 4 with the use of the images for operation displayed on the operating screen and corresponding to the first operating tool 51 and the second operating tool 52.
(5) Although the above embodiment describes, as an example, a configuration in which the traveling devices 41 of the working device 4 are not driven, the present invention is not limited to the above embodiment. For example, it is possible to employ a configuration in which the traveling devices 41 are driven and accordingly the working device 4 is self-propelled. At this time, it is possible to employ a configuration in which the operating device 5 is capable of operating the traveling devices 41 in the work operation mode to control forward and rearward movement, left and right turning, and the like of the working device 4.
(6) Although the above embodiment describes, as an example, a configuration in which the working device 4 includes the traveling devices 41 and travels while being in contact with the ground surface, the present invention is not limited to the above embodiment. For example, it is possible to employ a configuration in which the working device 4 is suspended from the aerial vehicle 2 and performs work such as seeding on the ground surface while not being in contact with the ground surface. At this time, it is possible to employ a configuration in which the operating device 5 operates only the work execution device 42 in the work operation mode.
(7) Although the above embodiment describes, as an example, a configuration in which the working machine 1 includes the aerial vehicle 2, the coupling mechanism 3, and the working device 4, the present invention is not limited to the above embodiment. For example, it is possible to employ a configuration in which an underwater drone or the like configured to be capable of traveling in water is used instead of the aerial vehicle 2.

Note that it is possible to apply the configurations disclosed in the above embodiments (including the alternative embodiments, the same applies hereinafter) in combination with a configuration disclosed in another embodiment to the extent that no contradiction arises. Further, the embodiments disclosed in the present specification are examples, and the embodiments of the present invention are not limited thereto. It is possible to make modifications as appropriate without departing from the object of the present invention.

### Industrial Applicability

The present invention is applicable to a working machine including an aerial vehicle and a working device that are operable with the use of an operating device.

### Description of Reference Signs

- 1: Working Machine
- 2: Aerial Vehicle
- 4: Working Device
- 5: Operating Device
- 25: Flight Imaging Device (Camera)
- 45: Work Imaging Device (Camera)
- 50: Device Body
- 51: First Operating Tool (Operating Stick)
- 52: Second Operating Tool (Operating Stick)
- 53: Operation Mode Switching Operating Tool (Operating Tool, First Mode Switching Tool)
- 60: Display Device
- 5A: Aerial Vehicle Operating Unit
- 5B: Work Operating Unit

## Claims

1. An operating device capable of operating an aerial vehicle that flies by generating thrust and a working device coupled to the aerial vehicle and capable of performing work on a ground surface, the operating device comprising:
a single device body; and
an operating tool included in the single device body and configured to operate the aerial vehicle and the working device.

2. The operating device according to claim 1, further comprising:
a first mode switching tool configured to switch between a flight operation mode for operating the aerial vehicle and a work operation mode for operating the working device.

3. The operating device according to claim 2, further comprising:
a communication device configured to output an operation signal to the aerial vehicle in response to operation of the operating tool in the flight operation mode, and to output an operation signal to the working device in response to operation of the operating tool in the work operation mode.

4. The operating device according to claim 3,
wherein the operating tool includes an operating stick swingable in one direction and another direction intersecting the one direction, and
in the flight operation mode, in response to operations of the operating stick in the one direction and the other direction, the communication device outputs operation signals corresponding to the operations in the one direction and the other direction to the aerial vehicle, respectively, and in the work operation mode, in response to the operations of the operating stick in the one direction and the other direction, the communication device outputs operation signals corresponding to the operations in the one direction and the other direction to the working device, respectively.

5. The operating device according to claim 1,
wherein the operating tool includes a common operating tool configured to operate both the aerial vehicle and the working device simultaneously.

6. The operating device according to claim 1 or 2, further comprising:
a communication device configured to receive flight data transmitted from the aerial vehicle and work data transmitted from the working device.

7. The operating device according to claim 6,
wherein the flight data includes image data captured by a flight imaging device included in the aerial vehicle, and
the work data includes image data captured by a work imaging device included in the working device.

8. The operating device according to claim 7, further comprising:
a display device configured to display the image data included in the flight data and the image data included in the work data.

9. The operating device according to claim 8, further comprising:
a second mode switching tool configured to switch between a flight display mode for displaying an image captured by the flight imaging device on the display device and a work display mode for displaying an image captured by the work imaging device on the display device.

10. The operating device according to claim 1, further comprising:
an aerial vehicle operating unit including the operating tool configured to operate the aerial vehicle; and
a work operating unit including the operating tool configured to operate the working device.

11. A working machine comprising:
an aerial vehicle configured to fly by generating thrust;
a working device coupled to the aerial vehicle and configured to perform work on a ground surface; and
the operating device according to any one of claims 1 to 10.
